# EUROPEAN PATENT SPECIFICATION

(11) **EP 1 916 745 B1**
(45) Date of publication and mention of the grant of the patent: **19.05.2010**
(21) Application number: 07118546.6
(22) Date of filing: 16.10.2007
(51) Int. Cl.: H01R 13/432, H01R 13/04, H01R 4/18, H02K 5/22

(54) **Assembly for connecting the stator windings of an electric motor**
Anordnung für den Anschluss der Statorwicklungen eines Elektromotors
Ensemble pour la connexion des enroulements du stator d'un moteur électrique

(30) Priority: 24.10.2006 IT PD20060394
(43) Date of publication of application: 30.04.2008
(73) Proprietor: Inarca S.p.A., 35010 Vigodarzere (PD) (IT)
(72) Inventor: Boischio, Ido, 35100 Padova (IT)
(74) Representative: Modiano, Micaela Nadia

(56) References cited:
- DE-A1- 2 315 484
- DE-U1- 29 601 034
- FR-A- 1 531 915
- US-A- 5 873 752

## Description

The present invention relates to an assembly for connecting the stator windings of an electric motor to the respective power supply.

It is known that the connection of the stator windings of an electric motor to the respective power supply can occur manually, or, as in recent times and in the case of a large number of connections, in an automated manner.

Automated connection provides for the use of a first box-like connector made of plastic material, which is fixed to the stator and which accommodates internally, in respective passages, first electrical terminals to which cables and wires connected to the windings are crimped, and a second box-like connector, inside which there are second electrical terminals to which the wires connected to the power supply are crimped; the first connector is coupled stably to the second connector and the respective terminals are also coupled.

In most configurations, the passages of the connectors are mutually aligned and parallel to the axis of the electric motor; the respective electrical terminals also lie in the same direction.

In certain applications, during the automated connection of the second connector to the first connector, the electrical terminals thereof, due to incorrect positioning or dimensional defects of the connectors, may tend to exit from their containment passage or move, causing jamming during connection.

Further attention is drawn to FR 1 531 315 A which was used to draft the preamble of claim 1, and DE 2 960 1034 U also showing a similar assembly.

The aim of the present invention is to solve the problems noted during the connection of the stator windings of an electric motor to the respective power supply.

Within this aim, an object of the present invention is to provide a connection assembly for the stator windings of an electric motor which is stable.

Another object of the present invention is to provide an assembly for connecting the stator windings of an electric motor which does not allow jamming during the steps for connection.

Another object of the present invention is to provide an assembly for connecting the stator windings of an electric motor which is structurally simple.

This aim and these and other objects which will become better apparent hereinafter are achieved by an assembly for connecting the stator windings of an electric motor to the respective power supply, characterized in that it comprises a first box-like connector provided with first internal passages which are open at their ends and are designed to accommodate corresponding first electrical terminals, said first connector being provided with means for coupling to the stator which are adapted to arrange said first passages parallel to the axis of the electric motor, at the end part of said first internal passages there being a coupling cavity for at least one second box-like connector provided with second internal passages which are open at their ends and are designed to accommodate corresponding second electrical terminals for coupling to said first electrical terminals, said second internal passages being aligned with said first internal passages, each of said first terminals being constituted by a central flat body which has a substantially quadrangular shape and from which there protrude, in a substantially coplanar manner, a flat pin for contact with a respective said second electrical terminal and, on the opposite side with respect to said flat pin, a portion for crimping to a corresponding cable connected to the stator windings, two parallel teeth protruding from the surface of said central flat body and being suitable to avoid extraction from the corresponding internal passage, said two teeth being formed along the lateral portions of said substantially quadrangular contour which are parallel to said end, lateral guiding shoulders for said flat pins protruding from the bottom of said cavity, said lateral guiding shoulders guiding two first mutually opposite side walls of said flat pins, while the second mutually opposite side walls are free in order to allow electrical contact with said second electrical terminals.

Further characteristics and advantages of the invention will become better apparent from the description of a preferred but not exclusive embodiment thereof, illustrated by way of non-limiting example in the accompanying drawings, wherein:
Figure 1 is a sectional side view of a connection assembly according to the invention;
Figure 2 is a partially sectional front view of a portion of the connection assembly of Figure 1;
Figure 3 is a perspective view of an electrical terminal used in the connection assembly of the preceding figures;

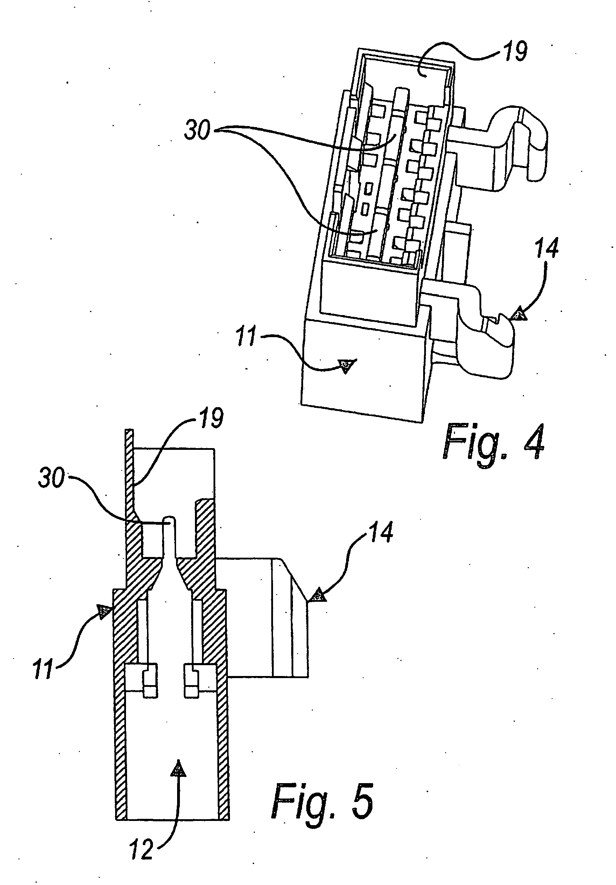

Figure 4 is a perspective view of a connector of the connection assembly of the preceding figures;
Figure 5 is a sectional side view of the connector of Figure 4.

It is noted that anything found to be already known during the patenting process is understood not to be claimed and to be the subject of a disclaimer.

With reference to the figures, an assembly for connecting the stator windings of an electric motor to the respective power supply according to the invention is generally designated by the reference numeral 10.

The connection assembly 10 comprises a first box-like connector 11 provided with first internal passages 12 which are open at their ends and are designed to accommodate corresponding first electrical male terminals 13.

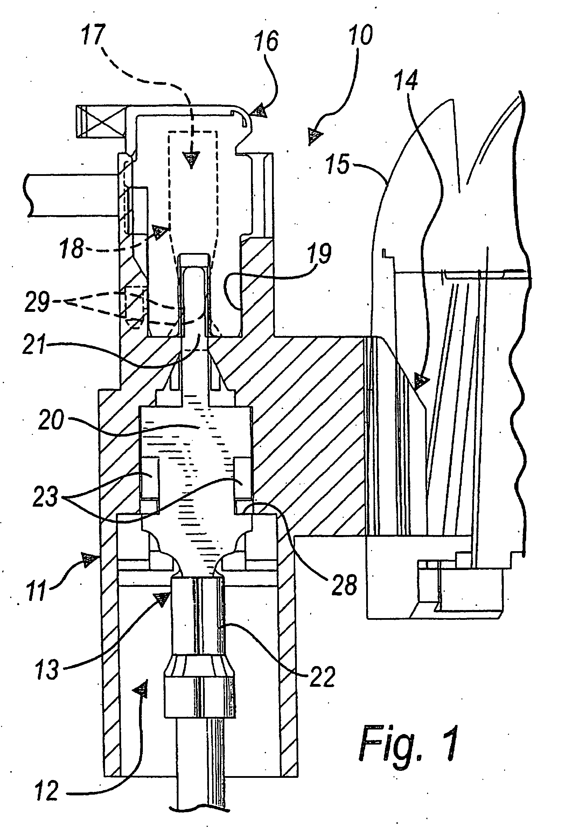

The first connector 11 is provided with means 14 for engaging with the stator, which are not described in detail since they are substantially of a known type, such as for example means for snap or interference coupling with portions of a dome made of plastic material (designated by the reference numeral 15 in Figure 1) for covering the stator.

The engagement means 14 are configured so as to arrange the first internal passages 12 parallel to the axis of the electric motor.

The connection assembly also comprises at least one second box-like connector 16, which is provide with second internal passages 17 which are open at their ends and are designed to accommodate corresponding second female terminals 18 which mate with the first electrical terminals 13 (in Figure 1, a second terminal 18 is shown schematically by means of broken lines).

The second connector 16 is mated with the first connector 11 by stable insertion within a cavity 19 formed at the end part of the first internal passages 12.

As shown, the second internal passages 17 are aligned with the first internal passages 12.

Each first electrical terminal 13 is constituted by a central flat body 20 which has a substantially quadrangular contour and from which there protrude, in a substantially coplanar manner, a flat pin 21 for contact with a respective second electrical terminal 18 and, on the opposite side with respect to the flat pin 21, a portion 22 for crimping to a corresponding wire connected to the stator windings; the flat pin 21 has a substantially quadrangular cross-section.

Two parallel teeth 23 protrude from the surface of the central flat body 20 and are adapted to avoid extraction from the corresponding first internal passage 12.

In particular, the two teeth 23 are provided along the lateral portions of the substantially quadrangular contour which are parallel to the end 21.

Moreover, the two teeth 23 are constituted by identical portions of the central flat body 20 which are mutually parallel; said portions are wing-shaped, are partially cut by blanking and are folded so as to rise from the flat arrangement of the central flat body 20.

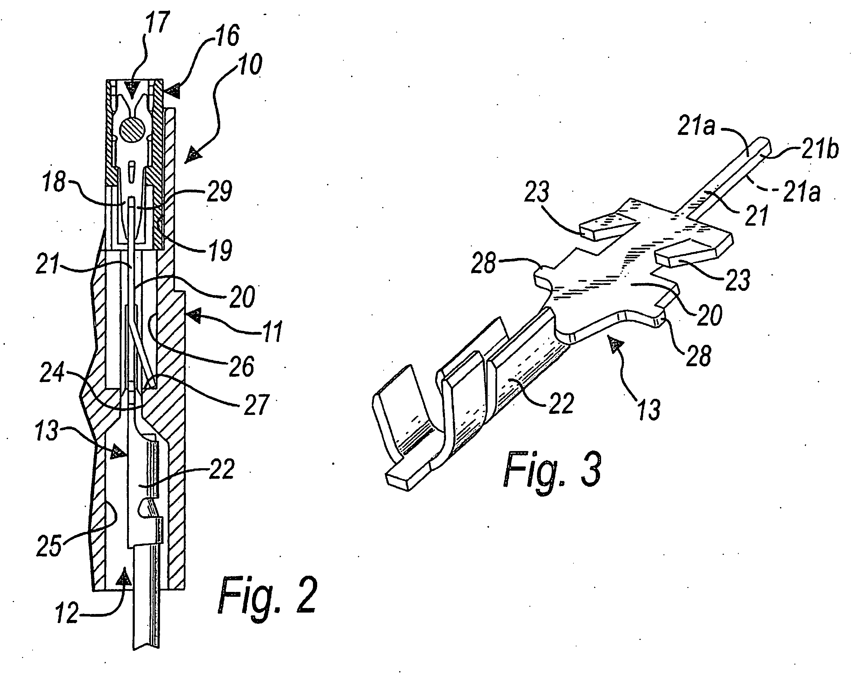

Each first internal passage 12 has a narrower portion 24 (Figure 2) which divides said passage into a first part 25, which is occupied by the crimping portion 22, and a second part 26, which is occupied by the central flat body 20; the narrower portion 24 forms, on the second part 26, shoulders 27 against which the ends of the teeth 23 abut.

The narrower portion 24 is smaller than the distance between the vertex of the teeth 23 and the central flat body 20.

The passage of the central flat body 20 is allowed by the fact that the two teeth 23 are elastically deformable.

The central flat body 20 of each first electrical terminal 13 has, on the side walls that correspond to the lateral portions on which the teeth 23 are provided, two mutually opposite stroke limiting abutments 28 for insertion in the corresponding first internal passage 12.

The second electrical terminals 18 have a portion for connecting to the first male terminals 13, which consists of a pair of mutually opposite wings 29 (shown schematically in broken lines in Figure 1; only one is visible in Figure 2), which clamp the end 21 of the first electrical terminals 13 and are connected to the power supply of the motor.

In order to prevent the flat pins 21 of the first electrical terminals 13 from oscillating excessively within the cavity 19, with the risk of bending during the mating of the second connector 16 to the first connector 11, lateral guiding shoulders 30 for the flat pins 21 protrude from the bottom of the cavity 19.

The lateral guiding shoulders 30 guide two first mutually opposite side walls 21a of the flat pins 21, while the second mutually opposite side walls 21b are free in order to allow electrical contact with the second electrical terminals 18.

In particular, the width of the lateral guiding shoulders 30 is narrower than the distance between the second mutually opposite side walls 21b, thus allowing the pins to protrude from the shoulders 30 and ensure electrical contact with the second electrical terminals 18.

It should be noted that said shoulders provide a discontinuous crossmember on the bottom of the cavity 19.

In practice it has been found that the invention thus described achieves the intended aim and objects.

The structure of the connecting assembly according to the invention in fact allows a wiring which is particularly stable and easy to assemble.

This is possible by virtue of the fact that a first electrical terminal is used which has two extraction-preventing teeth arranged in a parallel configuration on lateral portions of said terminal, which allow an extremely stable arrangement thereof during assembly and during operation.

The arrangement of the teeth on lateral portions of the terminal allows to provide, within the cavity for mating of the second connector to the first connector, guiding shoulders for the flat pins.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2006A000394 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An assembly for connecting the stator winding of an electric motor to the respective power supply, comprising a first box-like connector (11) provided with first internal passages (12) which are open at their ends and are designed to accommodate corresponding first electrical terminals (13), said first connector (11) being provided with means (14) for coupling to the stator which are adapted to arrange said first internal passages (12) parallel to the axis of the electric motor, at the end part of said first internal passages (12) there being a coupling cavity (19) for at least one second box-like connector (16) provided with second internal passages (17) which are open at their ends and are designed to accommodate corresponding second electrical terminals (18) for coupling to said first electrical terminals (13), said second internal passages (17) being aligned with said first internal passages (12), said first electrical terminals comprising a central body from which protrudes a pin for contact with a respective one of said second terminals and, on the opposite side with respect to a flat pin (21), a portion (22) for crimping to a corresponding cable connected to the stator windings, **characterized in that** each of said first electrical terminals (13) being constituted by a central flat body (20) which has a substantially quadrangular shape and from which there protrude, in a substantially coplanar manner, said flat pin (21) for contact with a respective one of said second electrical terminals (18), two teeth (23) protruding from the surface of said central flat body (20) and being adapted to avoid extraction from the corresponding first internal passage (12), said two teeth (23) being formed along the lateral portions of said substantially quadrangular contour which are parallel to said flat pin (21), lateral guiding shoulders (30) for said flat pins (21) protruding from the bottom of said cavity (19), said lateral guiding shoulders (30) guiding two first mutually opposite side walls (21 a) of said flat pins (21), while the second mutually opposite side walls (21b) are free in order to allow electrical contact with said second electrical terminals (18).

2. The assembly for connecting the stator windings of an electric motor to the respective power supply according to claim 1, **characterized in that** said two teeth (23) are constituted by portions of said central flat body (20) which are wing-shaped, are partially cut by blanking and are folded so as to rise from the flat extension of said central flat body (20).

3. The assembly for connecting the stator windings of an electric motor to the respective power supply according to claim 2, **characterized in that** said two teeth (23) are mutually identical and parallel.

4. The assembly for connecting the stator windings of an electric motor to the respective power supply according to one or more of the preceding claims, **characterized in that** each of said first internal passages (12) has a narrower portion (24) which divides said first internal passage (12) into a first part (25), which is occupied by said crimping portion (22), and a second part (26), which is occupied by said central flat body (20), said narrower portion (24) forming on said second part (26) shoulders (27) against which the ends of said teeth (23) abut, said narrower portion (24) having smaller dimensions than the distance between the vertex of said teeth (23) and said central flat body (20).

5. The assembly for connecting the stator windings of an electric motor to the respective power supply according to one or more of the preceding claims, **characterized in that** said central flat body (20) of said first electrical terminal (13) has, on its lateral sides, two mutually opposite stroke limiting abutments (28) for insertion in the corresponding said first internal passage (13).

6. The assembly for connecting the stator windings of an electric motor to the respective power supply according to one or more of the preceding claims, **characterized in that** said second electrical terminals (18) have a portion for connecting to said first electrical terminals (13) which consists of a pair of mutually opposite wings (29) which clamp said flat pin (21) of said first electrical terminals (13) and are connected to the power supply of the motor.

7. The assembly for connecting the stator windings of an electric motor to the respective power supply according to claim 1, **characterized in that** the width of said lateral guiding shoulders (30) is narrower than the distance between said second mutually opposite .side walls (21b), thus allowing to protrude from said shoulders (30) and ensure electrical contact with said second electrical terminals (18).

## Patentansprüche

1. Anordnung für den Anschluss der Statorwicklungen eines Elektromotors an die jeweilige Energiezufuhr, umfassend eine erste kastenartige Anschlussvorrichtung (11), die mit ersten internen Durchgängen (12) versehen ist, die an ihren Enden offen sind und dazu ausgelegt sind, zugehörige erste elektrische Anschlusselemente (13) aufzunehmen, wobei die erste Anschlussvorrichtung (11) mit Mitteln (14) zum Koppeln an den Stator versehen ist, die dazu ausgebildet sind, die ersten internen Durchgänge (12) parallel zur Achse des Elektromotors anzuordnen, wobei am Endteil der ersten internen Durchgänge (12) eine Kopplungsaufnahme (19) für mindestens eine zweite kastenartige Anschlussvorrichtung (16) versehen mit zweiten internen Durchgängen (17) vorhanden ist, die an ihren Enden offen sind und dazu ausgelegt sind, zugehörige zweite elektrische Anschlusselemente (18) zum Koppeln an die ersten elektrischen Anschlusselemente (13) aufzunehmen,
wobei die zweiten internen Durchgänge (17) mit den ersten internen Durchgängen (12) fluchten, wobei die ersten elektrischen Anschlusselemente einen zentralen Körper, aus dem ein Stift für Kontakt mit einem zugehörigen der zweiten Anschlusselemente herausragt, und auf der zu einem flachen Stift (21) gegenüberliegenden Seite einen Abschnitt (22) zur Crimpverbindung mit einem zugehörigen Kabel umfassen, das mit den Statorwicklungen verbunden ist, **dadurch gekennzeichnet, dass** jedes der ersten elektrischen Anschlusselemente (13) durch einen flachen zentralen Körper (20) gebildet ist, der eine im Wesentlichen viereckige Form aufweist und aus dem in einer im Wesentlichen koplanaren Form besagter flache Stift (21) für Kontakt mit einem zugehörigen der zweiten elektrischen Anschlusselemente (18) herausragt, wobei zwei Zähne (23) von der Oberfläche des zentralen flachen Körpers (20) abragen und dazu ausgebildet sind, eine Extraktion aus dem zugehörigen ersten internen Durchgang (12) zu verhindern, wobei die beiden Zähne (23) entlang der seitlichen Abschnitte der im Wesentlichen viereckigen Kontur ausgebildet sind, die parallel zu besagtem flachen Stift (21) sind, wobei seitliche Führungsansätze (30) für die flachen Stifte (21) von der Unterseite der Aufnahme (19) abragen, wobei die seitlichen Führungsansätze (30) zwei erste einander gegenüberstehende Seitenwände (21a) der flachen Stifte (21) führen, während die zweiten einander gegenüberstehenden Seitenwände (21b) frei sind, um einen elektrischen Kontakt mit den zweiten elektrischen Anschlusselementen (18) zu ermöglichen.

2. Anordnung für den Anschluss der Statorwicklungen eines Elektromotors an die jeweilige Energiezufuhr nach Anspruch 1, **dadurch gekennzeichnet, dass** die beiden Zähne (23) durch Abschnitte des zentralen flachen Körpers (20) gebildet sind, die flügelförmig sind, durch Ausstanzen teilweise zugeschnitten sind und so gefaltet sind, dass sie sich von der flachen Ausdehnung des zentralen flachen Körpers (20) erheben.

3. Anordnung für den Anschluss der Statorwicklungen eines Elektromotors an die jeweilige Energiezufuhr nach Anspruch 2, **dadurch gekennzeichnet, dass** die beiden Zähne (23) identisch und parallel zueinander sind.

4. Anordnung für den Anschluss der Statorwicklungen eines Elektromotors an die jeweilige Energiezufuhr nach einem oder mehreren der vorhergehenden Ansprüche, **dadurch gekennzeichnet, dass** jeder der ersten internen Durchgänge (12) einen verengten Abschnitt (24) aufweist, der den ersten internen Durchgang (12) in einen ersten Teil (25), der von dem Crimpabschnitt (22) eingenommen ist, und einen zweiten Teil (26), der von dem zentralen flachen Körper (20) eingenommen ist, unterteilt, wobei der verengte Abschnitt (24) auf dem zweiten Teil (26) Ansätze (27) bildet, gegen die die Enden der Zähne (23) anliegen, wobei der verengte Abschnitt (24) kleinere Abmessungen aufweist als der Abstand zwischen der Spitze der Zähne (23) und dem zentralen flachen Körper (20).

5. Anordnung für den Anschluss der Statorwicklungen eines Elektromotors an die jeweilige Energiezufuhr nach einem oder mehreren der vorhergehenden Ansprüche, **dadurch gekennzeichnet, dass** der zentrale flache Körper (20) des ersten elektrischen Anschlusselements (13) auf seinen Seiten zwei einander gegenüberstehende Hubbegrenzungsanschläge (28) zum Einsetzen in den zugehörigen ersten internen Durchgang (13) aufweist.

6. Anordnung für den Anschluss der Statorwicklungen eines Elektromotors an die jeweilige Energiezufuhr nach einem oder mehreren der vorhergehenden Ansprüche, **dadurch gekennzeichnet, dass** die zweiten elektrischen Anschlusselemente (18) einen Abschnitt zum Verbinden mit den ersten elektrischen Anschlusselementen (13) aufweisen, der aus einem Paar einander gegenüberstehender Flügel (29) gebildet ist, die den flachen Stift (21) des ersten elektrischen Anschlusselements (13) halten und mit der Energiezufuhr des Motors verbunden sind.

7. Anordnung für den Anschluss der Statorwicklungen eines Elektromotors an die jeweilige Energiezufuhr nach Anspruch 1, **dadurch gekennzeichnet, dass** die Breite der seitlichen Führungsansätze (30) schmaler ist als der Abstand zwischen den zweiten einander gegenüberstehenden Seitenwände (21b), was auf diese Weise ermöglicht, dass sie von den Ansätzen (30) abragen und einen elektrischen Kontakt mit den zweiten elektrischen Anschlusselementen (18) gewährleisten.

## Revendications

1. Ensemble pour la connexion des enroulements de stator d'un moteur électrique à l'alimentation en courant respective, comprenant un premier connecteur analogue à un boîtier (11) muni de premiers passages intérieurs (12) qui sont ouverts à leurs extrémités et sont conçus pour recevoir de premières bornes électriques correspondantes (13), ledit premier connecteur (11) étant muni de moyens (14) pour un couplage au stator qui sont adaptés pour agencer lesdits premiers passages intérieurs (12) parallèles à l'axe du moteur électrique, sur la partie d'extrémité desdits premiers passages intérieurs (12) étant agencée une cavité de couplage (19) pour au moins un second connecteur analogue à un boîtier (16) muni de seconds passages intérieurs (17) qui sont ouverts à leurs extrémités et sont conçus pour recevoir de secondes bornes électriques (18) correspondantes pour un couplage auxdites premières bornes électriques (13), lesdits seconds passages intérieurs (17) étant alignés avec lesdits premiers passages intérieurs (12), lesdites premières bornes électriques comprenant un corps central duquel fait saillie une broche pour un contact avec l'une respective desdites secondes bornes et, sur le côté opposé par rapport à une broche plate (21), une partie (22) pour un sertissage sur un câble correspondant connecté aux enroulements de stator, **caractérisé en ce que** chacune desdites premières bornes électriques (13) est constituée d'un corps plat central (20) qui a une forme sensiblement quadrangulaire et duquel fait saillie, de manière sensiblement coplanaire, ladite broche plate (21) pour un contact avec l'une respective desdites secondes bornes électriques (18), deux dents (23) faisant saillie de la surface dudit corps plat central (20) et étant adaptées pour éviter une extraction dudit premier passage intérieur (12) correspondant, lesdites deux dents (23) étant formées le long des parties latérales dudit contour sensiblement quadrangulaire qui sont parallèles à ladite broche plate (21), des épaulements de guidage latéraux (30) pour lesdites broches plates (21) faisant saillie du fond de ladite cavité (19), lesdits épaulements de guidage latéraux (30) guidant deux premières parois latérales mutuellement opposées (21a) desdites broches plates (21), tandis que les secondes parois latérales mutuellement opposées (21b) sont libres afin de permettre un contact électrique avec lesdites secondes bornes électriques (18).

2. Ensemble pour la connexion des enroulements de stator d'un moteur électrique à l'alimentation en courant respective selon la revendication 1, **caractérisé en ce que** lesdites deux dents (23) sont constituées de parties dudit corps plat central (20) qui sont en forme d'ailes, sont partiellement découpées à l'emporte-pièce et sont pliées de manière à s'élever à partir de l'extension plate dudit corps plat central (20).

3. Ensemble pour la connexion des enroulements de stator d'un moteur électrique à l'alimentation en courant respective selon la revendication 2, **caractérisé en ce que** lesdites deux dents (23) sont mutuellement identiques et parallèles.

4. Ensemble pour la connexion des enroulements de stator d'un moteur électrique à l'alimentation en courant respective selon une ou plusieurs des revendications précédentes, **caractérisé en ce que** chacun desdits premiers passages intérieurs (12) a une partie plus étroite (24) qui divise ledit premier passage intérieur (12) en une première partie (25), qui est occupée par ladite partie de sertissage (22), et une seconde partie (26), qui est occupée par ledit corps plat central (20), ladite partie plus étroite (24) formant sur ladite seconde partie (26) des épaulements (27) contre lesquels les extrémités desdites dents (23) viennent en butée, ladite partie plus étroite (24) ayant des dimensions plus petites que la distance entre le sommet desdites dents (23) et ledit corps plat central (20).

5. Ensemble pour la connexion des enroulements de stator d'un moteur électrique à l'alimentation en courant respective selon une ou plusieurs des revendications précédentes, **caractérisé en ce que** ledit corps plat central (20) de ladite première borne électrique (13) a, sur ses côtés latéraux, deux butées de limitation de course mutuellement opposées (28) pour une insertion dans ledit premier passage intérieur (13) correspondant.

6. Ensemble pour la connexion des enroulements de stator d'un moteur électrique à l'alimentation en courant respective selon une ou plusieurs des revendications précédentes, **caractérisé en ce que** lesdites secondes bornes électriques (18) ont une partie pour une connexion auxdites premières bornes électriques (13) qui est constituée d'une paire d'ailes mutuellement opposées (29) qui pincent ladite broche plate (21) desdites premières bornes électriques (13) et sont connectées à l'alimentation en courant du moteur.

7. Ensemble pour la connexion des enroulements de stator d'un moteur électrique à l'alimentation en courant respective selon la revendication 1, **caractérisé en ce que** la largeur desdits épaulements de guidage latéraux (30) est plus étroite que la distance entre lesdites secondes parois latérales mutuellement opposées (21b), permettant ainsi de faire saillie desdits épaulements (30) et d'assurer un contact électrique avec lesdites secondes bornes électriques (18).
